(19) 

Europäisches
Patentamt
European
Patent Office
Office européen
des brevets

(11) **EP 4 529 109 A1**

(12) **EUROPEAN PATENT APPLICATION**

(43) Date of publication:
**26.03.2025 Bulletin 2025/13**

(21) Application number: **23382966.2**

(22) Date of filing: **22.09.2023**

(51) International Patent Classification (IPC):
***H04L 27/26*** (2006.01) ***H04L 27/30*** (2006.01)

(52) Cooperative Patent Classification (CPC):
**H04L 27/2634; H04L 27/30**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Iberdrola QSTP LLC**
**Doha (QA)**

(72) Inventors:
- **Di Pietro, Roberto**
  **Doha (QA)**
- **Omri, Aymen**
  **Doha (QA)**
- **Hernández Fernández, Javier**
  **Doha (QA)**

(74) Representative: **Pons**
**Glorieta Rubén Darío 4**
**28010 Madrid (ES)**

(54) **METHOD FOR DATA TRANSMISSION IN INDEX MODULATION OFDM-BASED COMMUNICATION SYSTEMS**

(57)    A method for data transmission using OFDM-based communication systems comprising the steps of obtaining a binary vector to be transmitted; converting the binary vector in a b base vector, being b a base greater than 2. Encoding the b base vector by means of a modulation technique; Transmitting the encoded vector via multi-subcarriers, using an OFDM transmission scheme.

EP 4 529 109 A1

**Description**

**OBJECT OF THE INVENTION**

The invention is referred to the field of digital data transmission, in particular, the invention is related to a data transmission method for orthogonal frequency-division multiplexing (OFDM) based communications.

The object of the invention is a method and a system for data transmission in OFDM-based communication systems. The proposed method allows increasing the total number of transmit data bits via a given set of sub-carriers, and significantly reduces the total energy consumption with respect to the equivalent standard methods.

**BACKGROUND ART**

Digital transmission systems are becoming fundamental pillars for various services and applications that assist and facilitate every day's life. The revolutionary expansion of smart communication devices, and mobile networks are expediting and are playing a crucial role in providing the first mile connectivity to massive internet of things (IoT), where a huge number of devices can be deployed and managed in a large area with a heterogeneous environment.

Accordingly, the expected number of connected devices will inevitably increase. Consequently, the widespread use of high-data-rate communication services and the need for everywhere access have led to a rapid increase in energy consumption. This massive increase is particularly a bottleneck at mobile terminals due to limited battery capacity, where charging or replacing those batteries is very challenging in various scenarios, e.g., IoT applications and systems.

In addition, energy consumption in communication networks leads to a large amount of greenhouse gas (GHG) emission. In fact, it has been reported that the information and communication technologies (ICT) sector itself (excluding broadcasting transmitters and receivers) contributes around 2 to 2.5 per cent of GHG emissions, equivalent to $\approx 1$ Gigatonne of $CO_2$, where fixed and mobile telecommunications contribute an estimated 24 per cent of the total.

Therefore, green communications have been proposed and recommended as an evolving solution to minimize the networking industry's carbon footprint. It consists in optimizing the energy consumption of network components. In this context, a significant amount of energy saving can be obtained by switching redundant or unused network components and resources to inactive mode, referred to as sleepscheduling. However, despite their significant advantages, energy saving and energy efficiency (EE) techniques, in general, may conflict with spectral efficiency (SE). Hence, how to balance the EE and SE is essential.

Recently, the index modulation (IM) concept has been proposed as a promising solution to significantly enhance communication system performances in terms of energy and spectral efficiencies.

In the literature, numerous research attempts have addressed the IM topic and have proposed and evaluated various schemes. These schemes can be classified into different signal domain IM techniques, which include spatial-domain IM (SDIM), channel-domain IM (CD-IM), time-domain IM (TD-IM), and frequency-domain IM (FD-IM) schemes.

In **Spatial Domain Index Modulation (SD-IM)** information bits are conveyed through antenna indexing in the spatial domain. Specifically, during each SD-IM-based transmission time slot, only one antenna is employed for data transmission, where the activated antenna index conveys $\log_2(N_{Tx})$ bits of extra information, with $N_{Tx}$ presents the number of available antennas.

In this regard, inter-channel interference (ICI) can be easily avoided, as only one antenna can be activated at the same time. Hence a reduced detection complexity and a higher received SNR can be observed, when compared to conventional multiple-input and multiple-output (MIMO) systems that require multiple costly RF chains to perform simultaneous data transmissions via multiple antennas.

Consequently, compared to standard MIMO systems, SD-IM is able to offer highspeed and reliable data transmissions with a significantly reduced hardware-and-software complexity implementation.

**Channel Domain Index Modulation (CD-IM)** consists in conveying additional information on the corresponding variable channel state information. More specifically, different independent multipath channel realizations can be produced, by using various techniques, e.g., placing radio frequency mirrors or electronic switches, near to the transmit antenna to vary the propagation scattering environment. According to the used technique, the transmitter and the receiver can be synchronized to convey extra information bits related to the index of the produced/used channel state.

**Time Domain Index Modulation (TD-IM)** is originally based on a pulse position modulation (PPM) scheme. This modulation has been widely deployed in optical communications. It consists in dividing each transmit symbol duration into a number of time slots, e.g., *Np,* where only one slot is used to transmit a pulse. In this case, the position of the pulse, which is corresponding to the used time slot, is able to convey $\log_2(Np)$ information bits, while significantly reducing the required transmission energy to that of the activated time slots only. The same concept has been used in the TD-IM scheme to improve the energy efficiency of conventional single-carrier frequency domain equalization (SC-FDE). In particular, each transmit frame should be divided into a number of time slots, where only some of them are used for data transmission. And hence, the index of the activated time slots can convey additional information bits, without energy consumption.

**Frequency Domain Index Modulation (FD-IM)**, also known as IM-OFDM, offers the possibility to convey extra information bits on the indices of activated OFDM subcarriers, with reduced energy consumption. The IM-OFDM schemes are classified into single-mode and multi-mode classes.

**Single-Mode Class:** The main idea of this technique consists in partitioning the data stream into two parts, where the first one, named on-off keying (OOK) vector, is used to select the subcarriers that should be activated to carry the data of the second part.

Hence, a significant energy efficiency can be observed, as only part of the subcarriers should be activated. However, due to the OOK vector randomness, the corresponding data rate is unstable, which may result in error propagation.

To overcome this issue, an enhanced SIM-OFDM (ESIM-OFDM) technique has been proposed, which consists of encoding/modifying the OOK vector. In particular, instead of activate/deactivate a given subcarrier, according to one corresponding bit from the OOK vector, each bit can be encoded in the states of two consecutive subcarriers. For instance, if the first bit of a given OOK vector is equal to 1, then the first subcarrier of the corresponding OFDM symbol will be activated, and the second one will be deactivated. However, if the first bit of a given OOK vector is equal to 0, then the first subcarrier of the corresponding OFDM symbol will be deactivated, and the second one will be activated. Accordingly, the total subcarriers of a given OFDM symbol should be divided into pairs. For each pair, only one subcarrier is activated, while the other one should remain silent/deactivated, with respect to the used OOK vector bits. In this case, the index of the activated subcarrier can convey one extra information bit.

However, this enhanced technique results in a loss of half of the index bits, when compared to the SIM-OFDM technique. Consequently, a generalized ESIM-OFDM (GSIM-OFDM) has been proposed, where the total OFDM subcarriers should be partitioned into different OFDM sub-blocks of length $L$. Then in each sub-block, only $k$ out of $L$ subcarriers ($k < L$) are activated to transmit the modulated symbols.

To further improve the spectral efficiency, an enhanced GSIM-OFDM (EGSIM-OFDM) technique has been proposed, by performing the same principle of GSIM-OFDM on the in-phase and quadrature (I/O) components separately. Moreover, the GSIM-OFDM and MIMO techniques have been combined to introduce and evaluate a new technique (MSIM-OFDM) that is able to offer higher performances than that of the conventional MIMO-OFDM.

A different SIM-OFDM concept has been presented, which consists of taking advantage of the subcarrier power, as a third dimension, to convey extra information bits.

Still another SIM-OFDM technique has been proposed based on conveying additional information bits, by changing both the number and the index of active subcarriers within each OFDM sub-block.

**Multi-Mode Class:** Different from the single-mode techniques, the multi-mode schemes have been proposed to exploit all the frequency resources, without a direct focus on the energy efficiency.

First, a dual-mode IM-based OFDM (DM-OFDM) was introduced, which fully uses all the spectral resource, while maintaining the IM advantages. More specifically, the subcarriers should be partitioned into different sub-blocks of length $L$, where all the subcarriers are activated to transmit the modulated symbols. In addition, for each OFDM sub-block, the corresponding subcarriers should be divided into two parts, to carry two different types of modulated symbols, using two distinguished mappers, e.g., $A$ and $B$.

In this case, for each sub-block, $k$ bits of the input data stream are used as index bits that indicates the subcarriers that should carry the modulated symbols of the mapper $A$ and that of $B$.

This new concept motivated various works to extend DM-OFDM. First, a generalized DM-OFDM (GDM-OFDM) technique has been proposed, by combining the concepts of EGSIM-OFDM and DM-OFDM methods.

After that, and to enhance the system energy efficiency, a zero-padded tri-mode IM-aided OFDM (ZTM-OFDM) has been introduced, which uses two different mappers and a zero-padding modulation to modulate only a fraction of the total subcarriers, leading to a less energy consumption, when compared to DM-OFDM.

To further enhance the spectral efficiency, a multiple-mode IM-aided OFDM (MM-OFDM) technique has been proposed.

In the same context, a new multidimensional modulation-based SIM-OFDM method have been proposed, where the number of silent subcarriers can be used as a different dimension to convey extra information bits.

## DESCRIPTION OF THE INVENTION

The present invention discloses a new spectral-energy-efficient transmission scheme for OFDM-based communication systems.

The proposed solution uses a new general digital modulation that increases the total number of transmit data bits via a given set of sub-carriers, and significantly reduces the total energy consumption with respect to the equivalent standard modulation.

Significant advantages in terms of spectral-energy-efficiency with acceptable BER have been obtained. For instance, the proposed solution can offer an energy gain of 58% and a transmit bit gain of 59%, with respect to the standard BPSK modulation.

The proposed method is based on a new IM-OFDM technique that offers two notable characteristics:

i) It enhances the spectral efficiency, by increasing the total number of transmit bits via a given set of subcarriers, in comparison to the equivalent standard modulation.
ii) It enhances the energy efficiency by forcing some subcarriers to be silent, according to the corresponding transmit message.

The proposed method consists of a new IM-OFDM technique that can be deployed within a general OFDM-based communication systems.

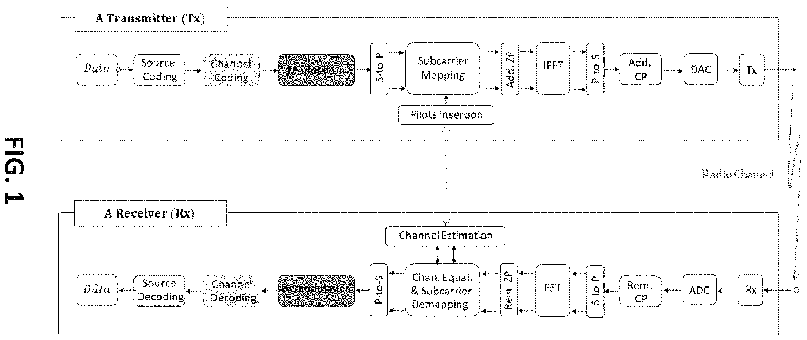

The method can be applied to any OFDM-based communication scheme, by modifying the corresponding digital modulation/demodulation, and the relevant signal processes, as presented in Figure 1. As shown in this figure, to transmit a given real data "Data", from a transmitter *Tx* to a receiver *Rx*, using the introduced solution, the following signal processing steps are needed:

- **Source Coding:** In this step, the real data should be converted to a binary vector B of size N.

- **Channel Coding:** The channel coding is not a component of the introduced contribution in this work, where we have been focusing on improving the original digital modulation rather than improving the channel coding.

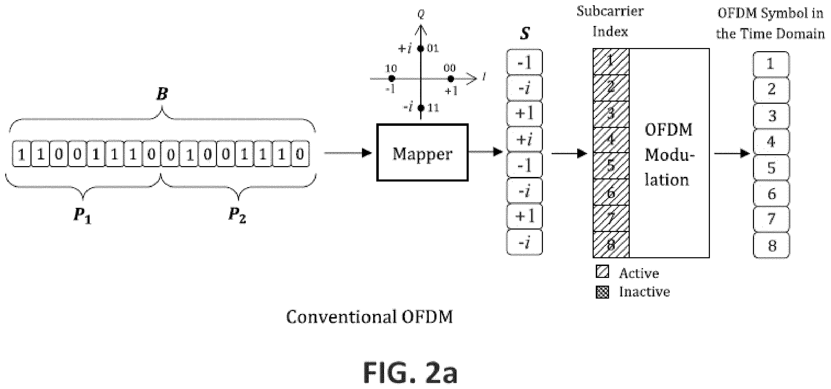

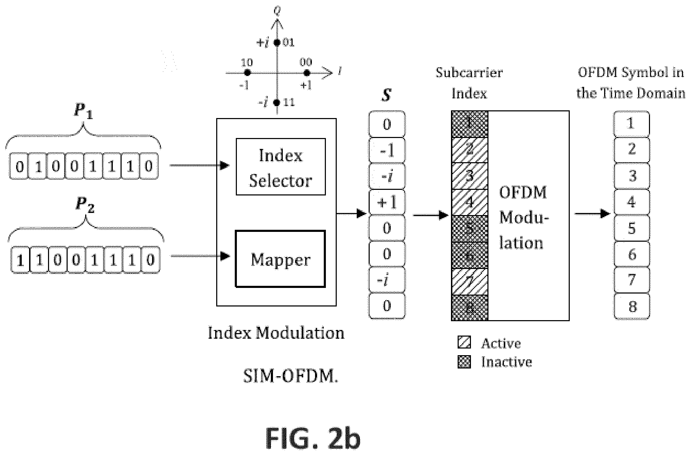

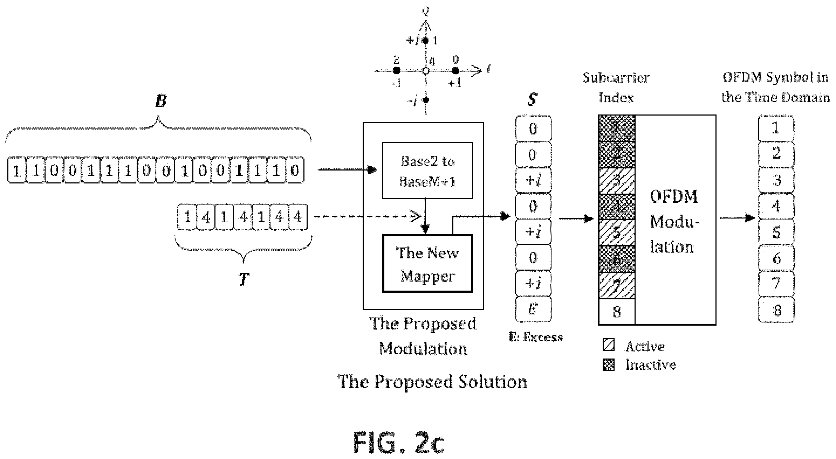

- **Modulation:** This processing step is the main element of the introduced solution. To clearly explain the principle and the novelty of the proposed technique, we present in Figures 2A, 2B and 2C, an illustration of the main steps of the proposed and baseline techniques. As shown in this graph, for a given number of subcarriers, the proposed modified modulation technique is able to convey more bits, when compared to the other ones. More technical and analysis details are provided in the following section, where we further explain the corresponding technical parts and we show how the proposed method outperforms the related standard ones in the literature.

- **Subcarrier Mapping and Pilot Insertion:** In this step, the output of the introduced techniques will be allocated, according to the time-frequency resources, along with the pilot samples to be used for the channel estimation at the reception side.

- **OFDM modulation:** The inverse fast Fourier transform (IFFT) algorithm is used in this step to perform the OFDM modulation.

- **Adding Cyclic Prefix (CP):** This step is used to avoid the inter-symbol interference between the different transmit OFDM symbols in the time domain.

- **Digital to Analog Conversion (DAC) and Signal Transmission:** the output of the OFDM modulation and the cyclic prefix adding should be converted to analog signal that contains complex samples in the time domain, denoted by $x(t)$. This samples will be transmitted using a specific carrier frequency, $f_c$, and a predefined transmit power, $P_T$.

- **Radio Channel:** In this step, the transmitted complex symbols x(t) will be affected by multipath channel attenuation and additive noise, where the received signal at *Rx*, can be expressed as follows:

$$y(t) = h(t) \otimes \sqrt{P_T}\, \mathrm{x}(t) \exp(-j2\pi f_c) + n(t),$$

where, & is the convolution product operator, $h(t)$ and $n(t)$ are the complex channel multipath gain and the additive noise, respectively. In this work, and without loss of generality, the Typical Urban 6 path channel (TU6) has been used as a popular multipath channel model for different wireless telecommunications [40]. And, the noise are assumed to be additive white Gaussian Noise (AWGN) that can be added according to a predefined SNR value.

- **Signal Reception and Time to Frequency Domain Conversion:** At the reception side, the *Rx* should first convert the received signal from analog to digital format. Then, after removing the CP samples, the signal will be converted to the frequency domain, using the FFT algorithm, to get the following complex samples.

$$Y_{k,n} = H_{k,n}\, \sqrt{P_T}\, X_{k,n} + N_{k,n},$$

where, $H_{k,n}$, $X_{k,n}$ and $N_{k,n}$ are, respectively, the channel gain, the transmit sample, and the noise sample of subcarrier k in OFDM symbol n in the frequency domain.

- **Channel Estimation:** By using the inserted (predefined pilot), the channel coefficient will be estimated to detect the different complex channel gain $\hat{H}_{k,n}$. In this work, and without loss of generality, the Spline interpolation [41] has been used as a channel estimation method.

- **Channel Equalization:** In this step, by using the estimated channel gain $\hat{H}_{k,n}$, the received samples $Y_{k,n}$, the corresponding transmit modulated symbol can be detected to have $\hat{X}_{k,n}$, using a simple least square (LS) method.

- **Demodulation:** This step presents the inverse process of the modified modulation, using the proposed scheme. Indeed, the samples $\hat{X}_{k,n}$ should be converted to base $M+1$ vector $\hat{T}$. Then, converting $\hat{T}$ to a binary vector to have the estimated transmit binary vector; $\hat{B}$.

- **Source Decoding:** Finally, the source decoding should be used to convert the detected vector $\hat{B}$. to the estimated transmit data; $\widehat{Data}$ .

Moreover, the present invention also relates to a computer program adapted to perform the steps of the method defined and a computer readable storage medium comprising said computer program.

## DESCRIPTION OF THE DRAWINGS

Fig. 1. General OFDM-based communication scheme, using the introduced FD-IM technique as a modified digital modulation process.

Fig. 2A, 2B, 2C. shows a comparison between the method of the invention and two relevant methods in the literature.

Fig. 3A, 3B. Shows energy-spectral efficiency comparison between the method of the invention and the SIM-OFDM technique.

Fig. 4A, 4B. shows examples of received modulated symbols for standard and modified BPSK modulations (with a SNR = 20 dB).

Fig. 5. shows the unencoded BPSK BERs variations vs. SNR for different schemes, with perfect known and estimated CSIs, and with energy saving.

Fig. 6. shows the unencoded BPSK BERs variations vs. SNR for different schemes, with perfect known and estimated CSIs, and with no energy saving.

Fig. 7. shows an exemplary embodiment of a testbed setup.

Fig. 8A, 8B. shows an example of a transmitted frame, and its received version, in time domain, with a Tx antenna's gain equals to 20 dBi, and a Rx antenna's gain equals to 30 dBi.

Fig. 9. shows practical unencoded BERs variations vs. antenna's gain for different schemes, with and without energy saving.

## PREFERRED EMBODIMENTS OF THE INVENTION

The invention relates to a novel method for data transmission using OFDM-based communication systems. The new method includes a digital modulation that enhances the spectral efficiency, by increasing the total number of transmit bits via a given set of subcarriers, when compared to the equivalent standard modulation. In addition, it enhances the energy efficiency by forcing some subcarriers to be silent (with a null value), during the OFDM modulation, according to the corresponding transmit message.

To clearly explain the principle of the invention, a comparison between the proposed solution and the main relevant methods in the literature has been included in Figures 2A, 2B and 2C.

For instance, let us consider the standard binary phase-shift keying (BPSK) modulation. With this modulation, only two possible symbols can be sent via each subcarrier, [0 or 1], that will be encoded (before the OFDM modulation) to [-1 and 1], respectively.

In this case, adapting our proposed solution to the BPSK modulation, we can send 3 possible symbols via each subcarrier: [0, 1, or 2], where the corresponding modulated symbol are, respectively, [-1, 1, and 0].

To further explain the principle of the proposed method. Let us consider a binary vector B of size N as an input for a standard BPSK modulation. In this case, the output of this modulation is a vector S of size N that contains -1s and 1s, obtained by the expression:

$$S[k] = 2B[k] - 1.$$

With the method of the invention, comprising a modified BPSK modulation, 3 possible symbols instead of 2 can be modulated. For that, the binary vector B is converted from base 2 to base 3 to get a base 3 vector T of size L. Wherein L is defined as:

$$L = \left\lceil \frac{\log(2)}{\log(3)} N \right\rceil.$$

Then, encoding the vector T elements to get the modified BPSK modulated vector S that contains L elements, with possible values: [-1, 1, and 0], by using the expression:

$$S[k] = \frac{1}{4}(-2)^{1+T[k]}(2 - T[k]).$$

Note that the symbol 0 forces the corresponding subcarrier to be silent during the OFDM modulation. As a result, while for the standard BPSK modulation, we can send $N$ given bits via $N$ given subcarriers, adopting the method of the invention the $N$ bits can be sent via $L$ ($L < N$) subcarriers, wherein the $L$ subcarriers include the digits in base 3. Hence a gain of $N/L$ (in terms of total number of transmit bits per subcarrier) can be obtained.

As an example, with $N = 1024$, we have a gain of 1.5827 transmit bit per subcarrier, when using the proposed modulation, instead of the standard one.

Now, let us move to the general $M$ - $ary$ multilevel modulation, to detail and derive the general bit gain and energy gain expressions of the proposed scheme, with respect to the standard one.

Let us consider an OFDM modulation, with $N_{SC}$ subcarriers, and energy per modulation symbol (or per subcarrier) $E_S$. For the standard $M$ - $ary$ multilevel modulation, $N_{SC} \log_2(M)$ bits per one OFDM symbol can be transmitted, using all the defined subcarriers. However, with the modified modulation, the number of subcarriers that are needed to transmit all the $N_{SC} \log_2(M)$ bits is given by:

$$\left\lceil \frac{\log_2(2) N_{SC} \log_2(M)}{\log_2(M + 1)} \right\rceil = \left\lceil \frac{N_{SC} \log_2(M)}{\log_2(M + 1)} \right\rceil$$

This number presents the length of the base $M + 1$ vector that presents the binary vector of length $N_{SC} \log_2(M)$ bits. As a result, the number of transmit bits per subcarrier, within the proposed scheme, is given by:

$$\frac{N_{SC} \, log_2(M)}{\left\lceil \frac{N_{SC} \, log_2(M)}{log_2(M + 1)} \right\rceil}$$

Accordingly, the bit transmit gain of the introduced FD-IM technique, with respect to the standard one is expressed by:

$$bGain_{NM} = \left[\frac{N_{SC}\,log_2(M)}{\left\lceil\frac{N_{SC}\,log_2(M)}{log_2(M+1)}\right\rceil} - 1\right]100\%.$$

As shown in this derived expression, and with respect to the standard OFDM-based transmission scheme, the introduced technique is able to enhance the data transmission's spectral efficiency. For instance, and according to the derived bit gain expression in (11), the proposed technique offers a transmit bit gain of 58%, with respect to the standard BPSK modulation with M = 2 and NSC = 256. Hence, by using the proposed FD-IM technique, a significant gain in terms of total number of transmit bits can be observed in this case. In addition, by assuming that the base M+1 symbols have the same probability of existence in the transmit data, also a decrease of the transmission energy consumption can be obtained, quantified as:

$$EGain_{NM} = \left[1 - \frac{M}{(M+1)\left(1 + \frac{bGain_{NM}}{100}\right)}\right]100\%.$$

In fact, with the introduced FD-IM technique, we only need $\frac{M}{M+1}$ of the total used energy ($N_{SC}E_S$) per OFDM symbol, with respect to the standard one, as we transmit only $M$ symbols from the $M$ + 1 digits in base $M$ + 1. This $\frac{M}{M+1}$ of the total used energy can be used to carry $N_{SC}\log_2(M)\left(1 + \frac{bGain_{NM}}{100}\right)$ bits , so we have the corresponding bit energy equals to:

$$E_b^{(2)} = \frac{M\,N_{SC}\,E_S}{(M+1)\,N_{SC}\,\log_2(M)\left(1 + \frac{bGain_{NM}}{100}\right)}.$$

Hence, the energy gain of the introduced technique, with respect to the standard one is expressed as follows:

$$EGain_{NM} = \frac{E_b - E_b^{(2)}}{E_b}100\% = \left[1 - \frac{M}{(M+1)\left(1 + \frac{bGain_{NM}}{100}\right)}\right]100\%.$$

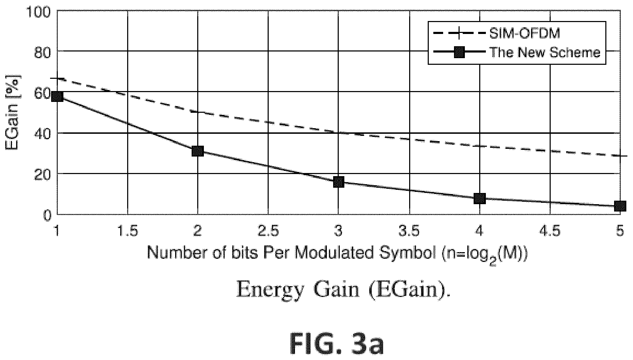

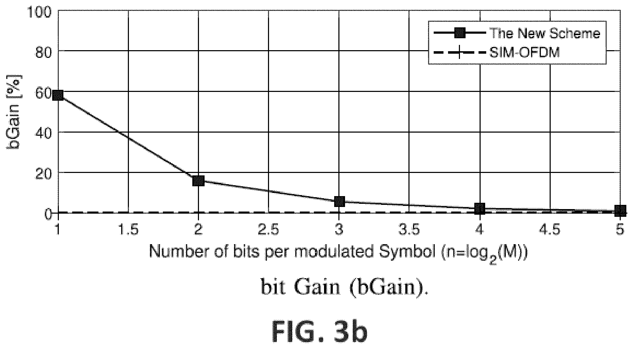

In Figures 3A and 3B, we present a performance comparison between the proposed solution and the SIM-OFDM technique, with respect to the conventional OFDM scheme. As depicted in these figures, despite the advantage of the SIM-OFDM scheme in terms of energy efficiency, It does not offer any spectral efficiency, with a null *bGain* value. However, the introduced FD-IM technique offers significant energy and bit gains, with respect to the conventional OFDM scheme.

Also, further numerical results have been generated using a generic OFDM-based communication simulator, which executed Monte Carlo simulations to evaluate the performances of the proposed scheme in terms of BER, with and without perfect known CSI.

Without loss of generality, the inputs of the simulator are presented in Table I, where the Typical Urban 6 path channel (TU6) has been used as a popular multipath channel model for different wireless telecommunications [40], and the same number of transmit bits has been considered for the different techniques for fair performance comparisons.

Table I. The simulation parameter values

| Parameter | Value |
|---|---|
| Number of transmit bits | 1024 Megabit |
| Number of Subcarriers | 1024 |
| Number of FFT Points | 1024 |

(continued)

| Parameter | Value |
| --- | --- |
| Number of Cyclic Prefix | 32 |
| Carrier Frequency | 500 MHz |
| Signal Sampling Frequency | 1 GHz |
| SNR | 0 : 5 : 30 dB |
| Modulation Type | BPSK |
| Multi-path Channel Type | TU6 [40] |
| Channel Estimation Method | Spline Interpolation |

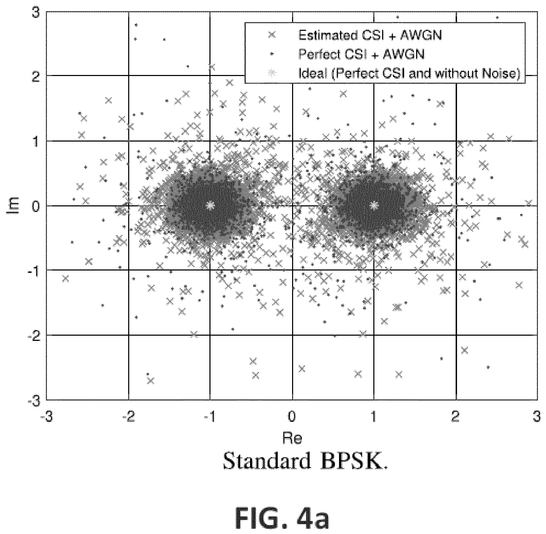

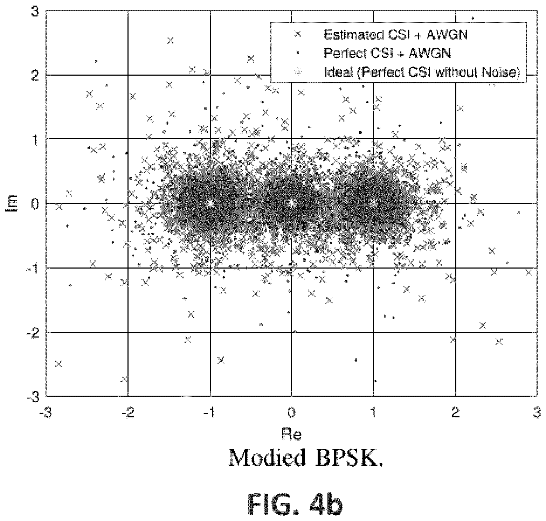

In Figures 4A and 4B, samples of received modulated symbols for the standard and modified BPSK modulations, with SNR = 20 dB, are represented. As shown in this figure, the CSI and the AWGN play a crucial role in the accuracy of the received/estimated modulated symbols for both schemes.

In the modified BPSK scheme of the proposed method, shown in Figure 4B, 3 possible symbols form the constellation diagram: [-1 and 1] that present the two original symbols of BPSK, and the [0] symbol that represents the null transmission.

At the reception, the transmitted symbols should be estimated/detected from the corresponding received samples that are affected by channel estimation error and additive noise, which results in a potential BER higher than that of the conventional BPSK, when the same SNR is used.

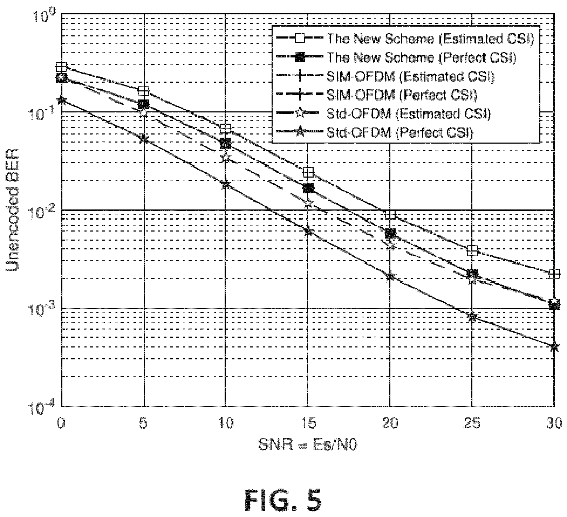

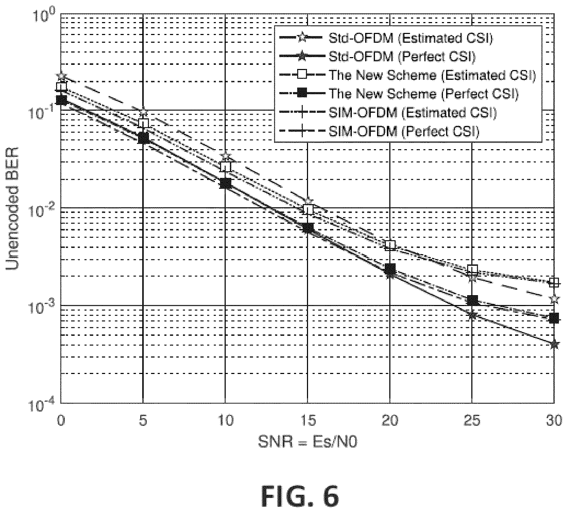

Figures 5 and 6 show the unencoded BERs variations vs. SNR, with and without energy saving, respectively. Thus, the BER variations of the considered schemes versus different SNR values are obtained.

For the energy saving case scenario, the saved energy due to the use of only fraction of the total OFDM subcarriers has been not used by or shared with the active subcarriers to increase the transmit power, and hence to improve the SNR.

In this case, and as shown in Figure 5, the proposed method offers an acceptable BER, with respect to that of the standard one that has the lowest BER for the different SNR values. This is due to the fact that the standard BPSK demodulation is dealing with only two decisions, [-1 or 1], as presented in Figure 4A.

However, the new modulation has 3 possible decisions: [-1, 0, and 1], which increases the decision errors, and hence increases the BER. The same results have been observed for the original SIM-OFDM, as it uses the same constellation diagram of the proposed scheme.

It is noteworthy that the proposed modulation is able to transmit more bits than the standard one, e.g., with a gain of 1.58 for the BPSK modulation, where some of the gained bits can be used within a given channel coding to significantly reduce the BER.

This is not the case for the original SIM-OFDM scheme, which does not offer extra transmit bits than the conventional OFDM scheme.

In Figure 6, unencoded BERs variations vs. SNR are shown for the different considered schemes, with perfect known and estimated CSIs and without energy saving.

In this case, the saved energy was shared with the active subcarriers to increase the corresponding received SNRs. As a result, for low and medium SNR values, e.g., SNR $\leq$ 20 dB, the proposed method and the SIM-OFDM scheme outperforms the standard OFDM scheme, with slightly better performance for the original SIM-OFDM scheme, when the same original SNR is used.

This is due to the fact that increasing the transmit power for an environment with high and medium noise levels can significantly enhances the received SNR and BER of the IM-schemes, when compared to that of the standard one without saved energy. In addition, the original SIM-OFDM offers a slightly higher saved energy than that of the proposed scheme.

For high SNR values, with low additive noise levels, the impact of increasing the transmit power on the BER is negligible, which results in better BER performances for the conventional OFDM scheme, when compared to the IM schemes.

In this case, the BER decision is directly related to the number of decisions, which is 2 for the original OFDM scheme, and 3 for the IM-based scheme. Although these results are for BPSK modulation, our solution is universal and applicable to any M-ary multilevel modulation.

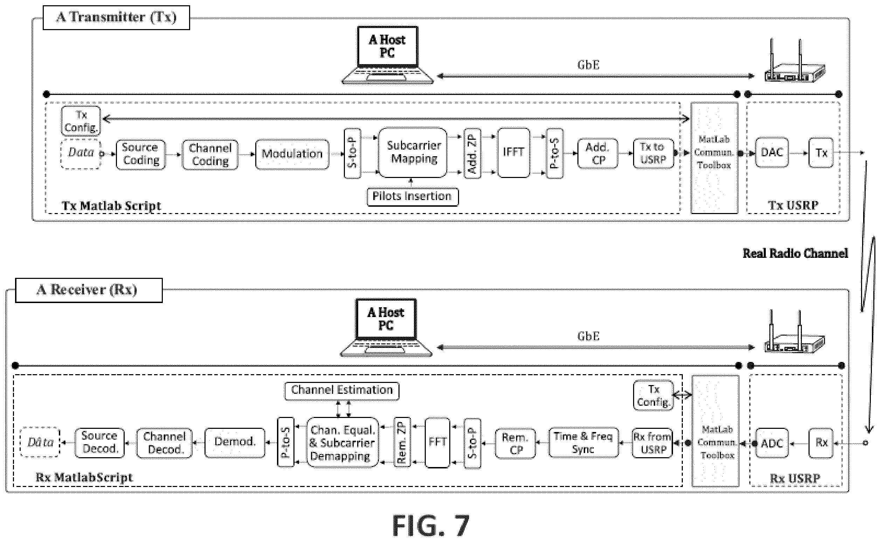

Also, practical evaluations have been performed to assess the proposed method. Figure 7 shows a preferred embodiment of a testbed setup configured according to the method of the invention. In this embodiment, a testbed is used, which consists of two nodes: a radio transmitter (*Tx*) and a radio receiver (*Rx*).

Each node has a host PC that is connected, by a Gigabit Ethernet (GbE) cable, to a USRPx310 device.

At the transmitter side, a generic OFDM-based transmitter has been implemented, using a flexible and adjustable Matlab software script, where the different considered modulations can be implemented to generate OFDM signals that convey random data/message.

This testbed has been implemented at a laboratory environment, to evaluate the considered schemes, with real radio channels, using the following hardware and software configuration parameters.

The used SW configuration parameters are listed in Table II. Except for the number of transmit bits per frame, the same presented parameters were used to test the performances of the different schemes. As shown in this table, there are two possible numbers of transmit bits per one frame. This is due to the fact that the proposed technique has the advantage of transmitting more bits than the other ones. In fact, with regard to the presented software configuration parameters, the proposed scheme is able to transmit 274.01 kbits per one frame. However, the two other schemes can transmit 174 kbits only per one frame.

Table II. The software configuration parameters

| Parameter | Value |
|---|---|
| Number of transmit bits | 1024 Megabit |
| Number of OFDM Symbols per Frame | 870 |
| Number of Transmit bits per Frame | 174/274.01 kbits |
| Number of Subcarriers | 200 |
| Number of Zero Padding | 56 |
| Number of FFT Points | 256 |
| Number of Cyclic Prefix | 16 |
| Preamble Length | $5 \cdot 10^4$ Samples |
| Frame Length | $35 \cdot 10^4$ Samples |
| Modulation Type | BPSK |
| Pilot Subcarrier Spacing | 4 |
| Pilot Symbol Spacing | 2 |
| Channel Estimation Method | Spline Interpolation |

Table III. The hardware configuration parameters

| Parameter | Value |
|---|---|
| Centre Frequency | *2.4* Ghz |
| Sampling Frequency | *5* Ghz |
| The Maximum Transmission Power | *100* mW |
| Output Data Type | double |
| Transmission Distance | *15* m (Line of Sight) |
| Transmitter Antenna Gain dBi | *10 : 30* dBi |
| Receiver Antenna Gain | *30* dBi |

In Table III, the considered HW configuration parameters are presented, where different values of the Tx antenna's gain were used to evaluate the BER of the different schemes, in various scenarios, with different transmit powers, and hence with different received SNRs.

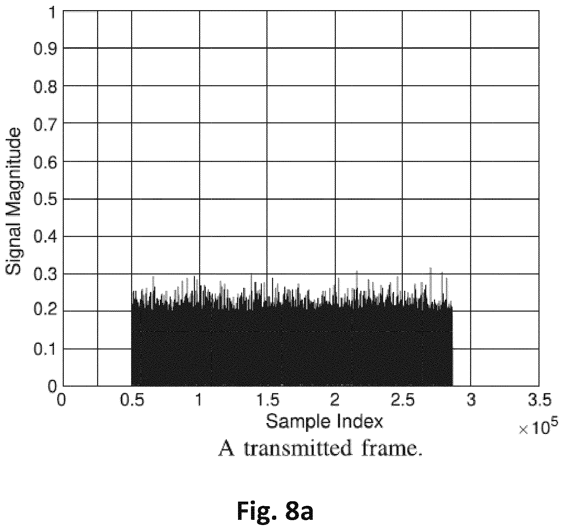

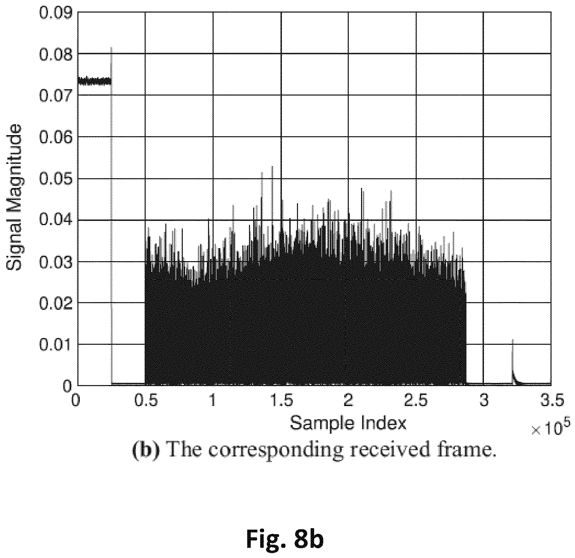

Figures 8A and 8B show an example of a transmitted frame, and its received version, in time domain, with a *Tx* antenna's gain equals to *20* dBi, and a *Rx* antenna's gain equals to *30*dBi. These figures show the impact of the channel attenuation as well as the additive noise on the transmitted signal.

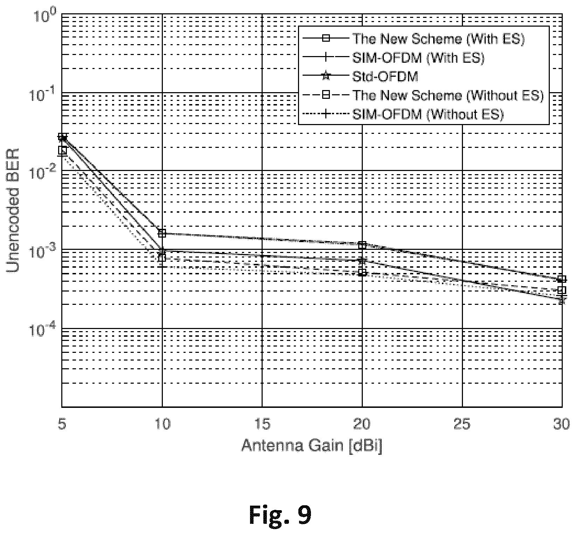

To evaluate the performance of the different considered schemes, Table IV and Figure 9 present the average and the variance of uncoded-BER vs. the transmit antenna's gain for the different considered schemes, with and without energy saving.

Table IV. Average uncoded-BER vs. the transmit antenna's gain for the different considered schemes

| | Number of Transmit bits/Frafme | bit Gain [%] | Energy Gain [%] | Unencoded BER | | | | | | | |
|---|---|---|---|---|---|---|---|---|---|---|---|
| | | | | Tx Antenaa's Gain [dBi] | | | | | | | |
| | | | | 5 | | 10 | | 20 | | 30 | |
| | | | | $\mu$ | $\sigma^2$ | $\mu$ | $\sigma^2$ | $\mu$ | $\sigma^2$ | $\mu$ | $\sigma^2$ |
| **Std - OFDM** | 174kb | 0 | 0 | $2.61\ 10^{-2}$ | $8.49\ 10^{-5}$ | $9.64\ 10^{-4}$ | $7.32\ 10^{-7}$ | $7.19\ 10^{-4}$ | $2.30\ 10^{-3}$ | $2.30\ 10^{-4}$ | $1.83\ 10^{-3}$ |
| **SIM - OFDM** | 174kb | 0 | 0 | $1.54\ 10^{-2}$ | $1.87\ 10^{-5}$ | $6.05\ 10^{-4}$ | $3.16\ 10^{-7}$ | $4.76\ 10^{-4}$ | $1.54\ 10^{-3}$ | $2.59\ 10^{-4}$ | $1.22\ 10^{-3}$ |
| **NIM - OFDM** | 274.01 kb | 57.48 | 0 | $1.83\ 10^{-2}$ | $2.91\ 10^{-4}$ | $8.00\ 10^{-4}$ | $5.00\ 10^{-7}$ | $5.00\ 10^{-4}$ | $2.00\ 10^{-3}$ | $3.04\ 10^{-4}$ | $1.00\ 10^{-3}$ |
| **SIM - OFDM** | 174 kb | 0 | 66.67 | $2.76\ 10^{-2}$ | $1.74\ 10^{-5}$ | $1.59\ 10^{-3}$ | $2.32\ 10^{-6}$ | $1.19\ 10^{-3}$ | $2.16\ 10^{-3}$ | $4.16\ 10^{-4}$ | $8.37 10^{-8}$ |
| **NIM - OFDM** | 274.01 kb | 57.48 | 57.66 | $2.75\ 10^{-2}$ | $1.59\ 10^{-5}$ | $1.60\ 10^{-3}$ | $1.84\ 10^{-6}$ | $1.14.10^{-3}$ | $6.97\ 10^{-8}$ | $4.13\ 10^{-4}$ | $1.15 10^{-7}$ |
| Std.Standard, SIM: Subcarrier Index Modulation, NIM:New Index Modulation, dBi:decibels to , $\mu$:mean, $\sigma^2$:variance | | | | | | | | | | | |

Similar to the simulation results, for the transmission scenario without energy saving, the proposed method and the SIM-OFDM scheme outperform the standard OFDM scheme, with slightly better performance for the original SIM-OFDM scheme.

For the transmission scenario with energy saving, the proposed method and the SIM-OFDM scheme offer acceptable BERs, with respect to that of the standard one.

Thus, the proposed technique is able to enhance both the energy and the spectral efficiency, while offering a good BER, when compared to relevant techniques in the literature.

In particular, the proposed scheme has the power to increase the transmit data rate by up to 59%, with respect to the relevant presented schemes. For instance, with regard to the HW and SW configuration parameters presented in Tables II and III, the proposed scheme needs 27.63 ms to transmit a real data with a size of 2 MB. However, the standard and SIM-OFDM schemes need 43.52 ms to transmit the same data. In another scenario, the proposed scheme is able to transmit 72.35 MB, during 1 s, while the other scheme can transmit only 45.95 MB, during the same period.

**Claims**

1. A method for data transmission using OFDM-based communication systems, which uses a new general digital modulation and comprises the steps of:

   • obtaining a binary vector B of size $N$ as an input for a given modulation;
   • converting the binary vector B in a base b vector (T), being b a base greater than 2;
   • encoding the $b$ base vector (T) by means of a new modulation technique, which uses 3 modulation symbols instead of 2; and
   • transmitting the encoded vector via multi-subcarriers, using an OFDM transmission scheme.

2. The method according to claim 1, wherein the binary vector $B$ of size $N$ is the input for a standard BPSK modulation.

3. The method according to claim 1, wherein the 3 possible symbols comprises a symbol 0, which forces a corresponding subcarrier to be silent during the OFDM modulation.

4. The method according to claim 1, wherein the base b is 3, converting the binary vector B in a base 3 vector (T).

5. The method according to claim 2, wherein the step of encoding the vector T uses a modified BPSK modulation technique defined by the expression:

$$S[k] = \frac{1}{4}(-2)^{1+T[k]}(2 - T[k]).$$

6. A computer program adapted to perform the steps of the method of any of claims 1 to 5.

7. A computer readable storage medium comprising the computer program of claim 6.

FIG. 1

Conventional OFDM

**FIG. 2a**

FIG. 2b

FIG. 2c

FIG. 3a

FIG. 3b

The New Scheme
SIM-OFDM

bGain [%]

Number of bits per modulated Symbol (n=$\log_2$(M)).

bit Gain (bGain).

Standard BPSK.

FIG. 4a

Modied BPSK.

# FIG. 4b

FIG. 5

**FIG. 6**

**FIG. 7**

A transmitted frame.

Fig. 8a

**(b)** The corresponding received frame.

## Fig. 8b

**Fig. 9**

Europäisches
Patentamt

European
Patent Office

Office européen
des brevets

## EUROPEAN SEARCH REPORT

Application Number

EP 23 38 2966

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 172 853 B1 (HUAWEI TECH CO LTD [CN]) 26 January 2022 (2022-01-26) * figures 5a, 5b * * paragraph [0038] – paragraph [0040] * ----- | 1-7 | INV. H04L27/26 H04L27/30 |
| X | STEPHEN MCCANN (BLACKBERRY): "Multi-Carrier OOK with Bipolar Modulation", IEEE DRAFT; 11-17-0704-00-00BA-MULTI-CARRIER-OOK-WITH-BIPOLAR-MODULATION, IEEE-SA MENTOR, PISCATAWAY, NJ USA , vol. 802.11ba 3 May 2017 (2017-05-03), pages 1-14, XP068115922, Retrieved from the Internet: URL:https://mentor.ieee.org/802.11/dcn/17/11-17-0704-00-00ba-multi-carrier-ook-with-bipolar-modulation.pptx [retrieved on 2017-05-03] * Slides 2, 3, 5, 8 * ----- | 1-7 | |

TECHNICAL FIELDS SEARCHED (IPC)

H04L

The present search report has been drawn up for all claims

| Place of search | Date of completion of the search | Examiner |
|---|---|---|
| Berlin | 28 February 2024 | Chave, Julien |

EPO FORM 1503 03.82 (P04C01)

## ANNEX TO THE EUROPEAN SEARCH REPORT
## ON EUROPEAN PATENT APPLICATION NO.

EP 23 38 2966

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2024

| Patent document cited in search report | | Publication date | Patent family member(s) | | Publication date |
|---|---|---|---|---|---|
| EP 3172853 | B1 | 26-01-2022 | CN | 106576024 A | 19-04-2017 |
| | | | EP | 3172853 A1 | 31-05-2017 |
| | | | JP | 6552128 B2 | 31-07-2019 |
| | | | JP | 2017528974 A | 28-09-2017 |
| | | | KR | 20170042680 A | 19-04-2017 |
| | | | US | 2016049999 A1 | 18-02-2016 |
| | | | WO | 2016023517 A1 | 18-02-2016 |

EPO FORM P0459

For more details about this annex : see Official Journal of the European Patent Office, No. 12/82